# EUROPEAN PATENT SPECIFICATION

(11) **EP 2 779 583 B1**
(45) Date of publication and mention of the grant of the patent: **02.09.2015**
(21) Application number: 14159706.2
(22) Date of filing: 14.03.2014
(51) Int. Cl.: G06F 17/30, H04L 29/08

(54) **Telecommunication method and system**
Telekommunikationsverfahren und -system
Système et procédé de télécommunication

(30) Priority: 15.03.2013 US 201313834098
(43) Date of publication of application: 17.09.2014
(73) Proprietor: SAP SE, 69190 Walldorf (DE)
(72) Inventor: Knop, Roger, 69190 Walldorf (DE)
(74) Representative: Richardt Patentanwälte PartG mbB

(56) References cited:
- EP-A1- 1 881 715
- US-A1- 2011 264 638
- US-A1- 2013 007 625

## Description

### BACKGROUND INFORMATION

The present invention discusses telecommunication systems comprising a plurality of mobile end user telecommunication devices, middleware servers and backend servers and corresponding telecommunication methods regarding the interactions of such a telecommunication system. Herein a middleware server is server computer, connected via a first network with at least one backend server and further connected via a second network with at least one mobile end user telecommunication device. A backend server is a server computer connected via the first network with a middleware server, wherein the backend server provides data and application functionality. Middleware servers in general act as intermediation entities for telecommunication between backend servers and mobile end user telecommunication devices.

Providing mobile applications access to data and services of an enterprise application, such as an Enterprise Resource Planning (ERP) or a Customer Relationship Management (CRM) application, is important in today's mobile computing environment. For example, the document DE 20 2005 019 239 U1 discloses an infrastructure for enabling communication between mobile end user telecommunication devices which may employ different communication standards and a backend server providing ERP services using a middleware. To provide mobile applications such access, organizations often utilize middleware servers. Such middleware servers are very good at interactions with mobile applications, such as may execute on smartphone and tablet devices. However, integration of enterprise application functionality and data is more difficult. Entities such as data objects within the middleware server and the mobile applications are often fragile and can be easily broken when changes are made to functionality and data of the enterprise application. Further complicating such integration is that development and maintenance teams that work with enterprise applications typically are distinct from development and maintenance teams of middleware servers and mobile applications. As a result, situations often arise where changes are made to the enterprise application that negatively affects middleware server services and mobile application operation.

The document EP 1 881 715 A1 discloses a remote wireless device registers with a server. Responsively, the server determines the identity of a server-side application associated with a user of the remote wireless device. The server may then generate an application definition file specific to the server-side application and to the remote wireless device. The application definition file may contain definitions for: a user interface format; a format for network messages; and a format for storing data. Using these definitions, the wireless device may receive data generated by the server-side application and formatted in accordance with the definitions. The wireless device may then present a user interface for the server-side application. The application definition file may be an Extensible Markup Language (XML) file.

The document US 2013/0007625 A1 discloses an apparatus, system, and computer-implemented method for connecting a mobile device to a backend server. The backend server includes a processor, a memory, and an input/output interface for receiving and transmitting information to and from the processor. The method comprising capturing information using a mobile device; providing the captured information to the backend server; creating a document in the baclcend server that includes the captured information; associating the document with a business object; and initiating a business process in accordance with the business object and the recorded information.

Further the document US 2011/0264638 A1 provides various systems and methods for communicating enterprise information between an enterprise backend server and a mobile device. For example, a middleware server may generate a formbuilder interface that allows a user to input form design information used to display a custom dynamic form. The form design information may include a plurality of form elements and an executable script that in part controls a behavior of the custom dynamic form. The custom dynamic form may be configured to prompt input of and receive the enterprise information. A value of a first one of the plurality of form elements may cause an action to be taken by the custom dynamic form, wherein the executable instruction when executed causes the action to be taken. The middleware server may communicate to the mobile device the plurality of form elements and the executable instruction. An operator of the mobile device may provide enterprise information using the custom dynamic form. The middleware server may receive, from the custom dynamic form, a plurality of values each entered used respective ones of the plurality of form elements. The plurality of values includes the enterprise information, and the plurality of form elements may include at least one value affected by the action to be taken by the form. The middleware server may communicate the plurality of values to the enterprise backend server.

### SUMMARY OF THE INVENTION

The present invention relates to a telecommunication method for a digital cellular wireless telecommunication system. In some embodiments the digital cellular wireless telecommunication system comprises a plurality of battery powered mobile end user telecommunication devices, at least one middleware server comprising a plurality of middleware data objects and at least one backend server. The middleware server is coupled to the mobile end user telecommunication devices via a wireless network while the middleware server is also connected to the backend server via a local area network. Each of the middleware data objects comprised in the middleware server comprises logical units of data and machine-executable code.

In a first step a request for retrieval of data submitted by one of the mobile end user telecommunication devices via the wireless network is received by the middleware server. The received request comprises data identifying one of the plurality of middleware data objects which is to process the request.

In a next method step the received request is being processed by the identified middleware data object by executing the machine-executable code comprised in the middleware data object by a processor of the middleware server. As a result of the execution of the machine-executable code the middleware server transmits a hypertext transport protocol call directed towards a service of the backend server via the local area network. This service call includes the received request for data as well as information identifying the middleware data object which caused the hypertext transport protocol call.

In a third step the called service of the backend server identifies data to be included in a response to the data request which has been received from the middleware server by retrieving information from a database table comprised in a database of the backend server. This database table comprises a row of data for each of the plurality of middleware data objects comprised in the middleware server identifying data items the respective middleware data object is capable of processing. Thus the called service is operable to identify data items, the middleware data object that calls the hypertext transport protocol call and process.

In a fourth step the previously identified data items are retrieved from the database of the backend server by the called service by performing a data query directed towards the database. Once the query data has been received the called service itself calls a data transport service to build a first transport data structure containing the retrieved data. In a preferred embodiment the first transport data structure is of the JavaScript Object Notation format. Once the first transport data structure has been built by the data transport service the first transport data structure is being transmitted through the middleware data object of the middleware server which caused the initial service call wherein the transmission is being conducted by the transport service via the local area network. Once the first transport data structure has been received at the middleware server the data comprised in the first transport data structure is being forwarded to the mobile end user telecommunication device via the wireless network.

The telecommunication method described above may have a number of advantages. First, it has to be noted that the service of the backend server which is being called by the middleware data object of the middleware server via the local area network determines by itself which data items have to be provided to the middleware server in response to the service call. This may have the advantage that the middleware data object does not need to tell the called service of the backend server which data items have to be provided to the middleware server in order to settle the request received from the mobile end user telecommunication device. As a result the network traffic between the middleware server and the backend server can be reduced.

The data traffic between the middleware server and the backend server may be optimized even further as the data items, which are provided to the middleware data objects as a result to the service call, are limited to such data items, which are processable by the middleware data object. Thus unnecessary data flow may be ruled out which may further decrease the data traffic of the network system.

In some embodiments, the processing of a request for data by a middleware data object may cause the middleware server to transmit a plurality of hypertext transport protocol calls directed towards a plurality of services of the backend server. This may in turn cause the called services of the backend server to respond by transmitting a plurality of first transport data structures to the middleware server via the local area network. The data, which is being forwarded to the mobile end user telecommunication devices comprises the contents of each first transport data structure received in response to the hypertext transport protocol calls.

This may have the advantage that even though the mobile end user telecommunication device needs a plurality of data items or data objects it only has to submit a single request for retrieval of data to the middleware server. This single request, upon being processed by the middleware data object, is then being split up into a plurality of requests, which are being answered by the backend server. As a result, a single packet of data can be transmitted to the mobile end user telecommunication devices as a response to the initial data request. This may have the advantage that the network load of the wireless telecommunication network is reduced. Further the computing time for submitting a plurality of data requests the battery powered mobile end user telecommunication device would have to handle is being outsourced to the middleware server which is not battery powered. This may have the advantage that the battery lifetime of the mobile end user telecommunication device is increased as the power consumption caused by processing the plurality of data requests can be significantly reduced.

In some embodiments no data is forwarded to the mobile end user telecommunication device upon reception of a plurality of first transport data structures at the middleware server, if the contents of at least one of the first transport data structures received in response to the hypertext transport protocol calls is not processable by the middleware data object or by the mobile entity.

This may have the advantage that that forwarding of data to the mobile end user telecommunication device wherein the forwarded data cannot be processed by the mobile end user telecommunication device is eliminated. As a result, the traffic between the mobile server and the mobile end user telecommunication device is reduced further.

In some embodiments, the telecommunication method may comprise a number of additional steps. In a first additional step a service of the backend server receives a second transport data structure from a middleware data object via the local area network. This second transport data structure may comprise updated data. Once the second transport data structure has been received data including the updated data is being read from the second transport data structure. Subsequently data storage locations to which the updated data read from the second transport data structure is to be stored are determined and a data update command based on the updated data and the determined data storage locations is being issued. If a success response is being received upon issuing the data update command a corresponding third transport data structure with a reference to the received second transport data structure and including data representative of the successful update is being transmitted to the middleware data object by a data transport service. However, if a failure response is being received a rollback command is being issued and a fourth transport data structure comprising a reference to the received second transport data structure and including data representative of the update failure is being transmitted to the middleware data object by the data transport service.

This may have the advantage that besides fetching data from the backend server the mobile end user telecommunication devices are also operable to update the data comprised in the backend server.

In some embodiments the middleware server comprises at least one database. Further the backend server of the digital cellular wireless telecommunications system is operable to trigger the backend services to execute the method steps of identifying data to be provided to a middleware data object, approving the identified data, building a first transport data structure and forwarding the first transport data structure to the middleware data object without having received a corresponding service call by the middleware data object of the middleware server. Once such a first transport data structure has been received at the middleware server the middleware server stores the received first transport data structure in the middleware server database.

In accordance with some preferred embodiments this triggering of backend services by the backend server is conducted once the load of the local area network connecting the middleware server and the backend server drops below a predefined threshold. However, it is also possible to choose other events as a reason to trigger the backend services. For example the forwarding of first data structures, the middleware server without a corresponding service call may be conducted on a regular basis for example overnight when the general network load or the processor load of the backend or the middleware server is low.

In yet another embodiment a middleware data object is upon receiving a request for retrieval of data from one of the mobile end user telecommunication devices operable to query the middleware server database for a first transport data structure corresponding to the received request. If a first transport data structure is received in response to the query the middleware data object forwards the data comprised in the first transport data structure to the mobile end user telecommunication device from which the request for retrieval of data originated. However, if no first transport data structure is received in response to the query the middleware data object transmits the hypertext transport protocol calls directed towards services of the backend server as described before.

This may have the advantage that in some cases a request for retrieval of data can be answered by the middleware server without having to query the backend server for corresponding data. This may be especially advantageous if no network connection between the middleware server and the backend server is available or if the network connecting the middleware server and the backend server has a high load status.

### BRIEF DESCRIPTION OF THE DRAWINGS

FIG. 1 is a logical block diagram of a system, according to an example embodiment.
FIG. 2 is a block flow diagram of a method, according to an example embodiment.
FIG. 3 is a block flow diagram of a method, according to an example embodiment.
FIG. 4 is a block diagram of a computing device, according to an example embodiment.

### DETAILED DESCRIPTION

Various embodiments herein include one or more of systems, and methods, providing a telecommunication framework. Such embodiments generally include one or more services executable to provide generic communication capabilities between data objects of a middleware server and an enterprise application to facilitate access to data and functionality of the enterprise application by mobile applications. Such mobile applications may execute on various computing device types, such as smartphones and tablet devices.

In some embodiments, an enterprise application stores data identifying one or both of data items and application services of an enterprise application that mobile applications and middleware server objects are enabled to utilize. This stored data may be stored in a dedicated table including a row of data with regard to data items for middleware data objects present on a middleware server. In other embodiments, the stored data may be stored in metadata of database tables with regard to data columns in the tables. In yet further embodiments, the stored data identifying data items and application services of an enterprise application that mobile applications and middleware server objects are enabled to utilize may be stored in one or more files.

Regardless of where the data identifying data items and application services of an enterprise application that mobile applications and middleware server objects are enabled to utilize, this data is consumed, in some embodiments, by generic services dedicated to receiving, servicing, and responding to function, service, data, and other calls between the enterprise application and the middleware server. These services, prior to sending data to the middleware server, refer to the data identifying data items and application services of an enterprise application that mobile applications and middleware server objects are enabled to utilize. Generally, when a data item is not identified as being enabled, the data item is not sent to the middleware server. As a result, changes can typically be made in the enterprise application without affecting performance of the middleware server or mobile applications.

Various embodiments of such middleware communication services, their deployment and operation, and variations thereto are described herein with reference to the figures.

In the following detailed description, reference is made to the accompanying drawings that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "invention" merely for convenience and without intending to voluntarily limit the scope of this application to any single invention or inventive concept if more than one is in fact disclosed.

The following description is, therefore, not to be taken in a limited sense, and the scope of the inventive subject matter is defined by the appended claims.

The functions or algorithms described herein are implemented in hardware, software or a combination of software and hardware in some embodiments. The software comprises computer executable instructions stored on computer readable media such as memory or other type of storage devices. Further, described functions may correspond to modules, which may be software, hardware, firmware, or any combination thereof. Multiple functions are performed in one or more modules as desired, and the embodiments described are merely examples. The software is executed on a digital signal processor, ASIC, microprocessor, or other type of processor operating on a system, such as a personal computer, server, a router, or other device capable of processing data including network interconnection devices.

Some embodiments implement the functions in two or more specific interconnected hardware modules or devices with related control and data signals communicated between and through the modules, or as portions of an application-specific integrated circuit. Thus, the exemplary process flow is applicable to software, firmware, and hardware implementations.

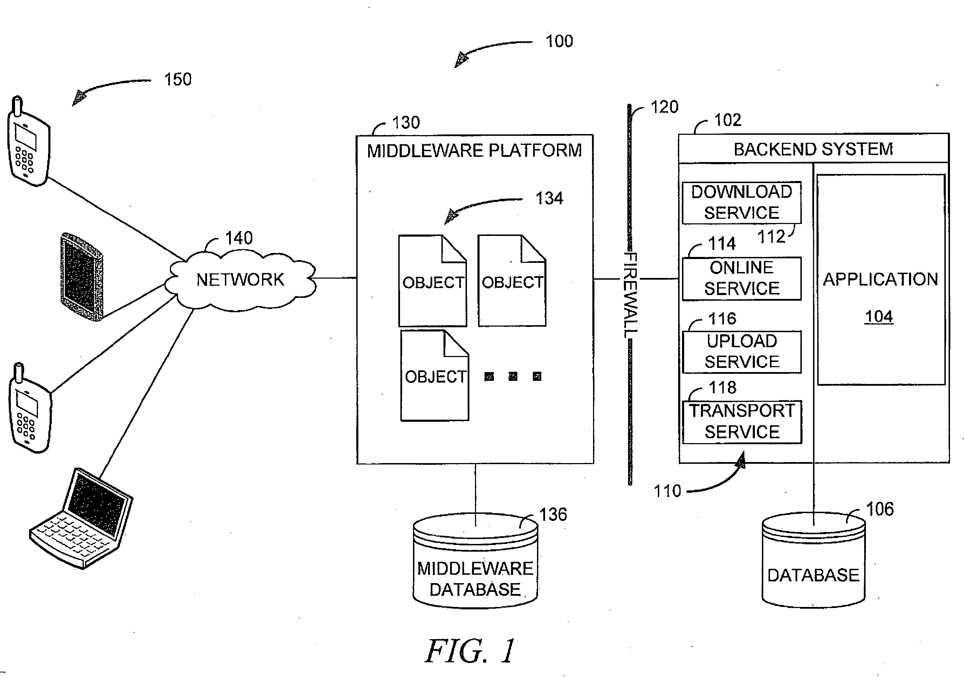

FIG. 1 is a logical block diagram of a system 100, according to an example embodiment. The system 100 includes a backend server 102, a middleware server 130, and a variety of mobile end user telecommunication devices 150. The backend server 102 and the middleware server 130 are connected via a network. In some embodiments, such as the illustrated embodiment of the system 100, the middleware server 130 is deployed on an opposite side of a firewall 120 than the backend server 102. However, in other embodiments, the middleware server 130 may instead be inside the firewall 120 or inside another firewall deployed between the middleware server 130 and an external network 140, such as the Internet. The variety of mobile devices 150 connect to the middleware server via the external network 140.

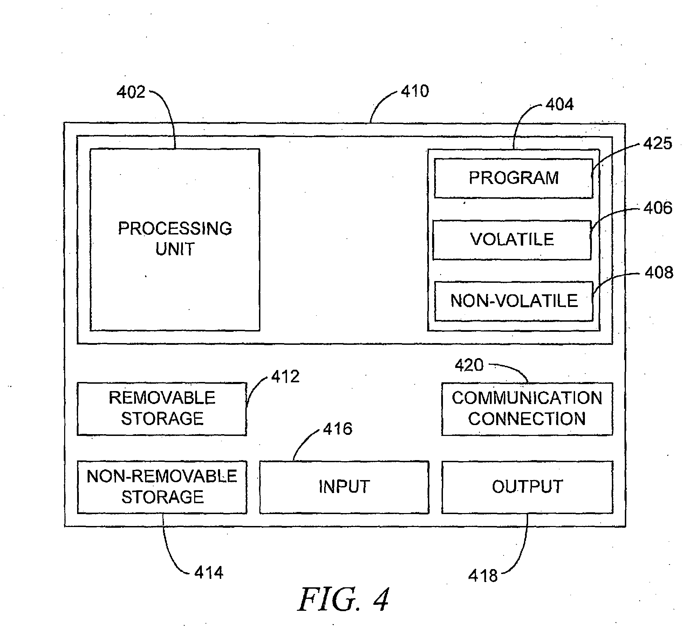

The backend server 102 and the middleware server 130 are typically deployed on distinct hardware, such as different server-class computing devices. However, in some embodiments, the backend server 102 and the middleware server 130 may be deployed on the same server-class computing device. In some such embodiments, the backend server 102 and middleware server 130 may be deployed within the same or different virtual machine environments on the same server-class computing device or a set of server-class computing devices. An example of such server-class computing devices, and the hardware components included therein, is illustrated and described with regard to FIG. 4.

The backend server 102 includes an application 104, such as an enterprise-class application that maybe various types of enterprise-class applications. Such various types of enterprise-class applications may include an ERP application, a CRM application, a document management application, and the like. Although only a single application 104 is illustrated, multiple applications 104 may be included in other embodiments.

The backend server 102 also typically includes a database 106 that stores application 104 data. Data stored in the database 106 may include data such as transaction data, master data, configuration data, documents, document templates, various forms of content, user interface definitions, stored procedures and data views that provide data processing functionality and data access, and the like.

The backend server 102 may further include middleware communication services 110. The middleware communication services 110, in some embodiments, are provided in the backend server 102 as one or more hardware or software modules. In other embodiments, the middleware communication services 110 are configurable software modules or services within the application 104. In yet other embodiments, the middleware communication services 110 are add-on modules or software content that can be added on to the application 104.

Regardless of how the middleware communication services 110 are included and positioned in the backend server 102, the middleware communication services 110 include services providing generic communication capabilities between objects 134 of a middleware server 130 and the application 104 to facilitate access to application 104 data and functionality by mobile end user telecommunication device 150 applications and apps. The middleware communication services 110 remove any requirements for objects, services, methods, and other portions of the application 104 to include specific middleware server 130 communication and integration coding. Instead, the objects, services, methods, and other portions of the application 104 can leverage the middleware communication services 110 to communicate with the middleware server 130 and objects 134 included therein. While there may still be some instances where objects, services, methods, and other portions of the application 104 may include specific middleware server 130 communication and integration coding, these instances are at least significantly minimized. The middleware communication services 110 will be described further below following description of the middleware server 130 and other portions of the system 100.

Communication between the middleware communication services 110 and the middleware server 134, and objects 134 therein, may be conducted according to one or more communication standards, whether the standards are general publicly defined standards or proprietary standards. For example, Hyper-Text Transfer Protocol may be utilized in some embodiments to exchange messages and data encoded according to the JavaScript Object Notation (JSON) standard. However, other data transport and data encoded standards may be utilized in other embodiments. Further, data, or portions thereof, communicated between the augmenting middleware communication services 110 and the middleware server 134, and objects 134 therein may be encrypted in some embodiments.

The middleware server 130 is generally a computing environment established with software that provides services to software applications to communicate. The middleware server 130 services provide integration capabilities between application 104 in the backend server 102 and applications and apps deployed to the mobile end user telecommunication devices 150. In some embodiments, the middleware server 130 includes a single set of data and functionality services to communicate with the backend server 102 and a plurality of data and functionality services to communicate with different applications and apps that may be deployed to different mobile end user telecommunication devices 150. The middleware server 130 may therefore be considered a data and functionality bridge between mobile end user telecommunication device 150 applications and apps and the backend server 102. An example of such a middleware server is the Sybase Unwired Platform, or SUP, available from SAP AG of Walldorf, Germany.

The middleware server 130 typically includes a set of objects 134. The objects 134 may exist for various purposes. However, some of the objects 134 are defined to comprise logical units of data and functionality for tasks that mobile end user telecommunication device 150 applications and apps perform with regard to data and functionality available from the application 104 in the backend server 102. For example, one such mobile end user telecommunication device 150 application or app task may include functionality for generation of a product order. An example mobile end user telecommunication device 150 app may first provide a view of offered products. One of the objects may exist in the middleware server 130 to obtain a data listing of all products offered by an organization for which the system 100 exists. Data of the offered products is stored in the database 106 and is accessible via the application 104. A data listing of the offered products may be accessible within the application 104 via a service call. However, that service call is not directly accessible by the mobile device 150 app. Thus, the middleware data object in the middleware server 130 is configured to obtain the offered product listing through communication with the backend server 102 to submit a call of the service and to receive a reply thereto. The middleware data object will then perform any translation of the offered product listing data needed for providing the data to the calling mobile end user telecommunication device 150 app and transmit the data to the mobile end user telecommunication device 150 app. The mobile end user telecommunication device 150 app, through communication with the object in the middleware server 130 is able to obtain the offered product listing data for presentation within the app.

Further, another middleware server 130 object 134 may exist for receiving an order of a product selected on the mobile end user telecommunication device 150 for purchase. This middleware server 130 object may be configured to receive different data elements from the mobile end user telecommunication device app, such as a product identifier, a quantity of product ordered, a customer identifier, a shipping mode option, a delivery address, a price, and other such order data. The data elements received by the middleware server 130 object may need to be stored in different tables of the database 106 and the storing of the data elements to the database 106 may need to be performed in a certain order or through one or more particular functional elements of the application 104. The middleware server 130 object, in such an embodiment, may be configured to communicate the order data, in a single logical unit of work to enable rollback functionality, to a plurality of different services of the application 104 and database 106, such as through a plurality of remote function calls. However, the data may be received from the mobile end user telecommunication device 150 app in a single communication and the middleware server 130 object is one logical unit, which may then break up the data into multiple service calls to the application 104 or database 106 in the backend server 102. The middleware server 130 object may then receive success confirmations in response to each call and send a single confirmation back to the calling mobile device 150 app from which the order data was received. In the event of an error or other failure with regard to any of the calls made by the middleware server 130 object, a rollback may be performed and the error communicated back to the calling mobile end user telecommunication device 150 app.

In some embodiments, the middleware server 130 may include a middleware database 136. The objects 134, in some embodiments, may be stored in the middleware database 136. In some embodiments, the middleware database 136 may cache data for delivery to mobile end user telecommunication device 150 applications and apps. Similarly, the middleware database 136, in some embodiments, may cache data received from mobile end user telecommunication device 150 applications and apps for delivery to the application 104 in the backend server 102.

The mobile end user telecommunication devices 150 are intended to represent various device types. The various device types may include one or more of smartphones, tablet devices, personal computers, set top boxes, computing devices of automobile information systems, and other such devices. Each of the mobile end user telecommunication devices 150 is capable of presenting data to users, receiving input, and connecting to the network 140, such as the Internet, to which the middleware server 130 is also connected. Each of the mobile end user telecommunication devices 150 is also capable of executing an application or app to communicate with the middleware server 130 over the network 140.

Each of the backend server 102, the application 104 in the backend server 104, the middleware server 130, and the mobile devices 150 and applications and apps that may execute thereon have been described. The middleware communication services 110 will now be described in detail.

As mentioned previously, the middleware communication services 110 include services providing generic communication capabilities between objects 134 of a middleware server 130 and the application 104 to facilitate access to application 104 data and functionality by mobile end user telecommunication device 150 applications and apps. In some embodiments, the middleware communication services 110 include services that can be leveraged by in a standardized manner by application 104 developers to handle communication with the middleware server 130 and the objects 134 therein.

Further, various embodiments of the middleware communication services 110 may further include functionality that determines functionality and data for which the middleware server 130, objects 134 therein, and mobile device 150 applications and apps are enabled to utilize. This functionality allows for application 104 developers and administrators to make changes in the application 104 and database 106, such as by adding additional data elements, without adversely affecting performance and operation of the middleware server 130, objects 134 therein, and mobile end user telecommunication device 150 applications and apps. In such embodiments, before a service of the middleware communication services 110 communicates data or exposes functionality to the middleware server 130 or an data object 134 therein, configuration data is considered. The configuration data is considered to determine whether particular relevant data items and functionality are active or inactive with regard to the middleware server 130 or the data object 134 to which the data or functionality is to be provided. Typically, middleware server 130 and data objects 134 therein are functionally synchronized with mobile end user telecommunication device 150 applications and apps. Therefore, when the middleware server 130 and data objects 134 therein are active or inactive, the mobile end user telecommunication device 150 applications and apps are equally active or inactive. Thus, one configuration setting with regard to a data item or functionality element provides sufficient configuration data with regard to all of the middleware server 130, data objects 134, and mobile end user telecommunication device 150 applications and apps. However, some embodiments may include one or more additional levels of configuration settings at the granularity of each of the middleware server 130, data objects 134, and mobile end user telecommunication device 150 applications and apps when differences there between are present, such as between different application and app versions, mobile end user telecommunication device 150 application and app platform version differences, and the like.

Although different embodiments may include different numbers of and purposes for the middleware communication services 110, some embodiments include three general middleware communication services 110. In such embodiments, a first of the three general services may include a download service 112 that communicates data to the middleware server 130 and data objects 134 therein. A second of the three general services may include an online service 114 that operates to provide ongoing interaction capabilities between the application 104 and database 106 and the middleware server 130 and data objects 134. A third of the three general services may include an upload service 116 that operates to receive data from the middleware server 130 and data objects 134, such as for creation and updating of new database 106 records, new transactions, and the like. In some embodiments, each of the three general services 112, 114, 116 may include data processing functionalities but leverage communication capabilities of another service, such as transport service 118, to communicate with the middleware server 130 and the data objects 134.

In some embodiments, the download service 112 operates to receive data download requests with regard to middleware server 130 data objects 134. A data download request may include a middleware server 130 data object 134 identifier identifying a source of the data download request. The download service 112 may generate a response to a received data download request by retrieving, from the database 106 or another data storage location, identifiers of data items relevant to the requesting middleware server 130 data object 134.

The relevant data items may be identified based on one or more of the particular requesting middleware server 130 data object 134, an application 104 or database 106 service identified in the request or associated with the requesting middleware server 130 data object 134, a service or data-referencing naming convention between a name of the requesting middleware server 130 data object 134 and services or data of the application 104 or database 106, or otherwise. However, in some embodiments, as generally referred to, naming conventions of middleware server 130 data objects 134 may be synchronized in a defined manner to link to services, such as remote function calls of the application 104 or database 106.

Regardless of how obtained by the download service 112, the retrieved identifiers of the relevant data items in such embodiments indicate which data items associated with the received data download request are active or inactive. The active and inactive indicators are retrieved with regard to one or more of the requesting middleware server 130, the middleware server 130 data object 134, or a mobile end user telecommunication device 150 application or app where the request originated or the results are to be delivered. In some embodiments, the download service 112 may then retrieve only the active data or retrieve all data and then filter out the inactive data. The download service 112 may then generate and transmit a data structure including the active retrieved data items to the middleware server 130 data object 134 of the middleware server 130 data object 134 identifier. In embodiments including the transport service 118, the download service 112 in performance of one or both of the generating and transmitting of the data structure to the middleware server 130 data object 134, may do so with a call to the transport service 118.

In some embodiments, the online service 114 operates to receive and service ongoing interaction between middleware server 130 data objects 134 and services and data of the application 104 and the database 106. For example, the online service 114 may receive functionality invoking requests from middleware server 130 data objects 134. Processing of a functionality invoking request by the online service 114 may include calling an application 104 service and receiving a response thereto. The online service 114 may then transmit at least a portion of the response to the middleware server 130 data object 134 from which the functionality invoking request was received. In some such instances, a session between the online service 114 and the requesting middleware server 130 data object 134 may be persisted when additional communications with regard to the provided response are likely. In some embodiments including the transport service 110, the communication session and data exchanged between the online service 114 and the middleware server 130 data object 134 may be handled by the transport service 110.

In some embodiments, the upload service 116 operates to receive data updates from middleware server 130 data objects 134. The data updates may include updates to create, read, update, or delete data maintained and stored by the application 104, such as may be stored in the database 106. In some embodiments, the upload service 116 operates to receive, from a middleware server 130 data object 134, a data structure including a data update. Based on data in the data structure, the upload service 116 may then determine database 106 locations to which the updated data is to be stored, which may include not only a change to previously stored data, but also or alternatively an insertion of a new database 106 record or deletion of a database 106 record. The upload service may then issue at least one data update command to the database 106 based on the determined storage locations. Upon receipt of a success response to the data update command, the upload service 116 may then transmit a success response to the middleware server 130 data object 134. However, upon receipt of a failure response to the data update command, the upload service 116 will typically issue a rollback command, if such a command is not automatically triggered within the application 104 or the database 106, to rollback the data update. The upload service 116, upon occurrence of such an update failure, will also transmit a failure response to the middleware server 130 data object 134. As update failure is possible, the upload service 116
will typically issue update commands either to the database 106 or to the application 104 within a single logical unit of work so that in the event of such a failure, the rollback can be performed by issuance of a single command to rollback all data updates associated therewith. The upload service 116, in embodiments including the transport service 118, may conduct some or all communication with the middleware server 130 and the data objects 134 therein, via the transport service 118.

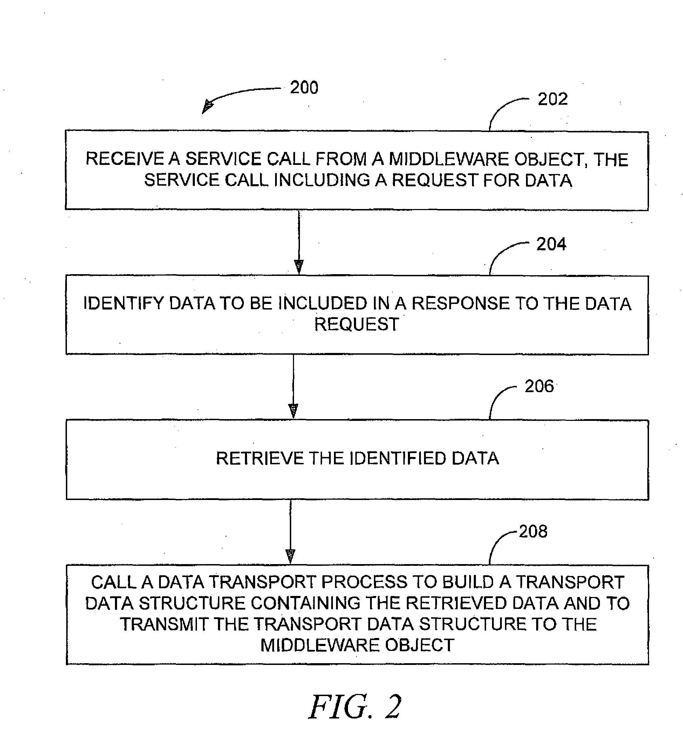

FIG. 2 is a block flow diagram of a method 200, according to an example embodiment. The method 200 is an example of how one or more of the middleware communication services 110 of FIG. 1 may perform in some embodiments. The method 200 includes receiving 202 a service call from a middleware data object including a request for data. The received 202 service call, in some embodiments, may be a remote function call of a function or service provided by a backend application, such as the application 104 of the backend server 102 of FIG. 1.

With regard to the data request, the method 200 may then identify 204 data to be included in a response to the data request. For example, identifying 204 data to be included in the response to the data request may includes retrieving data from a database table that identifies active data items the middleware data object is capable of processing. Such a database table may store data identifies active data items the middleware data object is capable of processing with a row of data for each of a plurality of middleware data objects. Each row of data for each of the plurality of middleware data objects may identify data items the respective middleware data object is capable of processing. In other embodiments, the identifying 204 of data to be included in a response to the data request may include reading metadata associated with a database table, a database view, service, remote function call, or other data storage or programmatic element from which data may be obtained identifying positively or negatively, inclusively or exclusively data items that are either active or inactive. In yet other embodiments, active and inactive data items may be identified in one or more files or other stored data structures.

The method 200 may then retrieve 206 the identified data and transmit the retrieved 206 data to the middleware data object from which the request was received. Transmitting the retrieved 206 data to the middleware data object may include calling 208 a data transport process to build a transport data structure containing the retrieved 206 data and to transmit the transport data structure to the middleware data object. In some such embodiments, the transport data structure built by the transport process is encoded in a format that identifies data items included in the transport data structure and values of each included data item. The format of the data structure, in some embodiments, is a JavaScript Object Notation format.

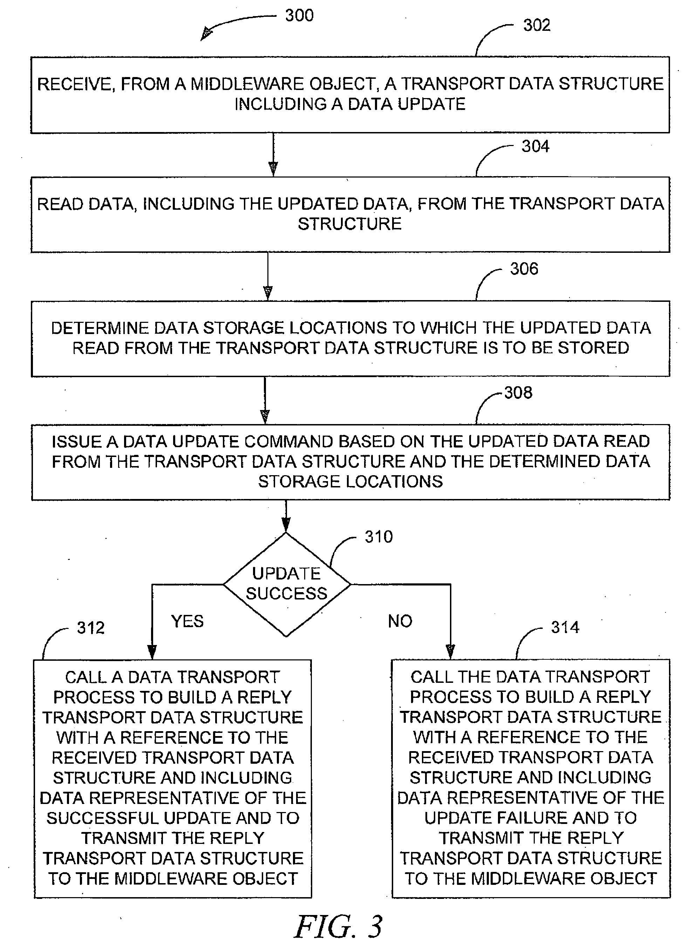

FIG. 3 is a block flow diagram of a method 300, according to an example embodiment. The method 300 is another example of how one or more of the middleware communication services 110 of FIG. 1 may perform in some embodiments. The method 300 includes receiving 302, from a middleware data object, a transport data structure including a data update. The method may then read 304 data, including the updated data, from the transport data structure and determine 306 data storage locations to which the updated data is to be stored. The method 300 further includes issuing 308 a data update command based on the updated data read from the transport data structure and the determined data storage locations. The data update command issued 308 may include one or more of an update command, such as in the form of a Structured Query Language (SQL) statement issued to a database, a call of a remote function, stored procedure, service, web service, object service, or other programmatic unit callable within an application or data processing platform. The data update command, when including more than one such command, may be issued 308 within a single transaction or logical unit of work. Issuing 308 the update command within a single transaction or logical unit of work provides an enhanced and simplified ability to rollback the update in the event that one or more the updates are not successful.

The method 300 in such embodiments may then wait to receive a message in response to each issued 308 update command. The method 300, upon receipt of responses to the update commands then determines 310 whether the update was successful. When successful, the method 300 may commit the updates, closing the transaction or logical unit of work and transmit a message indicating update success back to the middleware data object from which the transport data structure including the data update was received 302. For example, in some embodiments, the method 300 may include calling 312 the data transport process to build a transport data structure with a reference to the received 302 transport data structure and including data representative of the successful update. The called 312 data transport process may then transmit the transport data structure to the middleware data object.

When the determination 310 that the issued 308 update command was not successful, the method 300 may rollback the updates within the transaction or logical unit of work and transmit a message indicating update failure back to the middleware data object from which the transport data structure including the data update was received 302. Transmitting the message indicating update failure may include calling 314 the data transport process to build a transport data structure with a reference to the received 302 transport data structure and including data representative of the update failure. The called 314 data transport process may then transmit the transport data structure to the middleware data object.

FIG. 4 is a block diagram of a computing device, according to an example embodiment. In one embodiment, multiple such computer systems are utilized in a distributed network to implement multiple components in a transaction-based environment. An object-oriented, service-oriented, or other architecture may be used to implement such functions and communicate between the multiple systems and components. One example computing device in the form of a computer 410, may include a processing unit 402, memory 404, removable storage 412, and non-removable storage 414. Although the example computing device is illustrated and described as computer 410, the computing device may be in different forms in different embodiments. For example, the computing device may instead be a server-class computer, smartphone, a tablet, or other computing device including the same or similar elements as illustrated and described with regard to FIG. 4. Further, although the various data storage elements are illustrated as part of the computer 410, the storage may also or alternatively include cloud-based storage accessible via a network, such as the Internet.

Returning to the computer 410, memory 404 may include volatile memory 406 and non-volatile memory 408. Computer 410 may include - or have access to a computing environment that includes a variety of computer-readable media, such as volatile memory 406 and non-volatile memory 408, removable storage 412 and non-removable storage 414. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 410 may include or have access to a computing environment that includes input 416, output 418, and a communication connection 420. The input 416 may include one or more of a touchscreen, touchpad, mouse, keyboard, camera, and other input devices. The computer may operate in a networked environment using a communication connection 420 to connect to one or more remote computers, such as database servers, web servers, and other computing device. An example remote computer may include a personal computer (PC), server, router, network PC, a peer device or other common network node, or the like. The communication connection 420 may be a network interface device such as one or both of an Ethernet card and a wireless card or circuit that may be connected to a network. The network may include one or more of a Local Area Network (LAN), a Wide Area Network (WAN), the Internet, and other networks.

Computer-readable instructions stored on a computer-readable medium are executable by the processing unit 402 of the computer 410. A hard drive (magnetic disk or solid state), CD-ROM, and RAM are some examples of articles including a non-transitory computer-readable medium. For example, various computer programs or apps, such as one or more applications and modules implementing one or more of the methods illustrated and described herein or an app or application that executes on a mobile device or is accessible via a web browser, may be stored on a non-transitory computer-readable medium.

Other embodiments may be in the form of a system. The system of such embodiments includes at least one processor, at least one memory device, and at least one network interface device. The system further includes an application stored on the at least one memory device and executable by the at least one processor to store data in a database and provide application functionality within a first networked computing environment via the at least one network interface device. In such embodiments, at least a portion of the application functionality is callable via one or more application services.

The system further includes a middleware interface module stored on the at least one memory device. The middleware interface module includes and provides a set of services executable by the at least one processor. The services may include a download service to receive data download requests with regard to middleware data objects and to provide a response. A data download request in such embodiments typically includes at least a middleware data object identifier calling the download service. The response to the data download request may be generated by retrieving, from the database, identifiers of data items relevant to the requesting middleware data object and retrieving the data items corresponding to the retrieved data item identifiers. The download service may then generate and transmit the response, in the form of a data structure including the retrieved data items, to the middleware data object of the middleware data object identifier.

The middleware interface module may also include an online service to receive and service functionality invoking requests from middleware data objects. Processing of a functionality invoking request by the online service may include calling at least one application service and receiving a response thereto. The online service may then transmit at least a portion of the response to a middleware data object from which the functionality invoking request was received.

In a further embodiment, the middleware interface module includes at least one further service in the form of an upload service. The upload service of such embodiments receives data updates from middleware data objects. Data updates received by the upload service will typically be received with a data structure including a data update. The data structure may be received in the JSON format and identify each included data item and a value thereof. The update service may then determine database locations to which the updated data is to be stored or one or more services to utilize in updating the received data. The upload service may then issue at least one data update command to the database or call one or more identified services based on a the determined storage locations. Further, upon receipt of a success response to the data update command or commands, the upload service may transmit a success response to the middleware data object. Alternatively, upon receipt of a failure response to the data update command or commands, the upload service will issue a rollback command the data update and transmit a failure response to the middleware data object.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A telecommunication method for a digital cellular wireless telecommunication system comprising a plurality of battery powered mobile end user telecommunication devices (150), at least one middleware server (130) comprising a plurality of middleware data objects (134), each middleware data object (134) comprising logical units of data and machine executable code, the middleware server (130) being coupled to the mobile end user telecommunication devices (150) via a wireless network (140), the system further comprising at least one backend server (102), wherein the middleware servers (130) and the backend servers (102) are connected via a local area network, the method comprising:
• Receiving a request for retrieval of data from one of the mobile end user telecommunication devices (150) at the middleware server (130) via the wireless network (140), the request identifying one of the plurality of middleware data objects (134) for processing the request,
• Processing of the request by the identified middleware data object (134) by executing the machine executable code encapsulated in the middleware data object (134) by a processor of the middleware server (130), the execution of the machine executable code causing the middleware server (130) to transmit a Hyper-Text Transport Protocol call directed towards a service (110) of the backend server (102) via the local area network, the service call including the request for data and information identifying the middleware data object (134) causing the Hyper-Text Transport Protocol call,
• Identifying data to be included in a response to the data request by the called service (110) of the backend server (102) by retrieving information from a database table comprised in a database (106) of the backend server (102) the database table including a row of data for each of the plurality of middleware data objects (134), the row of data for each of the plurality of middleware data objects (134) identifying data items the respective middleware data object (134) is capable of processing, the retrieved information identifying data items the middleware data object (134) causing the Hyper-Text Transport Protocol call is capable of processing,
• Retrieving the identified data by the called service (110) by performing a data query directed towards the database (106) of the backend server (102),
• Upon reception of the queried data, calling a data transport service (118) to build a first transport data structure containing the retrieved data, wherein the first transport data structure is of the JavaScript Object Notation format,
• Transmitting the first transport data structure to the middleware data object (134) by the transport service (118) via the local area network,
• Forwarding the data comprised in the first transport data structure to the mobile end user telecommunication device (150) via the wireless network.

2. The telecommunication method of claim 1, wherein processing a request for data by a middleware data object (134) by executing the machine executable code comprised in the middleware data object (134) by a processor of the middleware server (130) causes the middleware server (130) to transmit a plurality of Hyper-Text Transport Protocol calls directed towards a plurality of services (110) of the backend server (102), causing the called services (110) of the backend server (102) to respond by transmitting a plurality of first transport data structures to the middleware server (130) via the local area network, wherein the data forwarded to the mobile end user telecommunication device (150) comprises the contents of each first transport data structure received in response to the Hyper-Text Transport Protocol calls.

3. The telecommunication method of claim 2, wherein no data is forwarded to the mobile end user telecommunication device (150), if the contents of at least one of the first transport data structures received in response to the Hyper-Text Transport Protocol calls is not processable by the middleware data object (134) or by the mobile end user telecommunication device (150).

4. The telecommunication method of any of the preceding claims, further comprising:
• Receiving by a service (110) of the backend server (102), a second transport data structure from a middleware data object (134) via the local area network, the second transport data structure comprising updated data;
• Reading data, including the updated data, from the second transport data structure;
• Determining data storage locations to which the updated data read from the second transport data structure is to be stored;
• Issuing a data update command based on the updated data read from the second transport data structure and the determined data storage locations;
• Upon receipt of a success response to the data update command, calling the data transport service (118) to build a third transport data structure with a reference to the received second transport data structure and including data representative of the successful update and to transmit the third transport data structure to the middleware data object (134); and
• Upon receipt of a failure response to the data update command:
issuing a rollback command; and calling the data transport service (118) to build a fourth transport data structure with a reference to the received second transport data structure and including data representative of the update failure and to transmit the fourth transport data structure to the middleware data object (134).

5. The telecommunication method of any of the preceding claims, wherein the middleware server (130) comprises at least one database (136), wherein the backend server (102) is operable to trigger the backend services (110) to:
• Identify data to be provided to a middleware data object (134) by retrieving corresponding information from the database table comprised in the database (106) of the backend server (102),
• Retrieve the identified data by performing a data query directed towards the database (106) of the backend server (102),
• Upon reception of the queried data, call a data transport service (118) to build a first transport data structure containing the retrieved data,
wherein the called data transport service (118) upon being called by the triggered backend service (110) builds the first transport data structure and transmits the first transport data structure to the middleware server (130), wherein the middleware server (130), upon receiving the first transport data structure from the backend server (102), stores the received first transport data structure in the middleware server database (136).

6. The telecommunication method of claim 5, wherein the triggering of backend services (110) by the backend server (102) is conducted once the load of the local area network connecting the middleware server (130) and the backend server (102) drops below a predefined threshold.

7. The telecommunication method of claims 5 or 6, wherein upon receiving a request for retrieval of data from one of the mobile end user telecommunication devices (150) at the middleware server (130), the middleware data object (134) identified by the received request is operable to query the middleware server database (106) for a first transport data structure corresponding to the received request, wherein:
• Upon receiving a first transport data structure in response to the query, the middleware data object (134) forwards the data comprised in the first transport data structure to the mobile end user telecommunication device (150) from which the request for retrieval of data originated,
• Upon receiving no first transport data structure in response to the query, the middleware data object (134) transmits the Hyper-Text Transport Protocol call directed towards a service of the backend server (102) via the local area network, the service call including the request for data and information identifying the middleware data object (134) causing the Hyper-Text Transport Protocol call.

8. A system comprising at least one backend server (102), at least one middleware server (130) and at least one mobile end user telecommunication device (150), wherein the backend server (102) is connected to the middleware server (130) via a local area network, wherein the mobile end user telecommunication device (150) is connected to the middleware server (130) via a wireless network (140), wherein the system is operable to execute the method as claimed in one of the claims 1-7.

9. A backend server comprising:
at least one processor, at least one memory device, and at least one network interface device;
an application (104) stored on the at least one memory device and executable by the at least one processor to store data in a database (106) and provide application functionality within a first networked computing environment via the at least one network interface device, at least a portion of the application functionality callable via one or more application services (110);
a middleware interface module stored on the at least one memory device, the middleware interface module including a set of services (110) executable by the at least one processor, the services (110) including:
a download service (112) to receive data download requests with regard to middleware data objects (134), each middleware data object (134) comprising logical units of data and machine executable code, a data download request including at least a middleware data object identifier, a response to the data download request generated by:
retrieving, identifiers of data items relevant to the requesting middleware data object (134) from a database table comprised in the database (106) of the backend server (102) the database table including a row of data for each of the plurality of middleware data objects (134), the row of data for each of the plurality of middleware data objects (134) identifying data items the respective middleware data object (134) is capable of processing;
retrieving, from the database (106), data items corresponding to the retrieved data item identifiers; and
generating and transmitting a data structure including the retrieved data items to the middleware data object (134) of the middleware data object identifier.

10. The backend server of claim 9, wherein the middleware interface module includes at least one further service, the at least once further service including:
an online service (114) to receive and service functionality invoking requests from middleware data objects (134) via the at least one network interface device, the processing of a functionality invoking request including calling at least one application service, receiving a response thereto, and transmitting at least a portion of the response to a middleware data object (134) from which the functionality invoking request was received.

11. The backend server of claim 10, wherein the middleware interface module includes at least one further service, the at least one further service including:
an upload service (116) to receive data updates from middleware data objects (134), the upload service (116) executable to:
receive, from a middleware data object (134), a data structure including a data update;
determine database locations to which the updated data is to be stored;
issue at least one data update command to the database (106) based on a the determined storage locations;
upon receipt of a success response to the data update command, transmitting a success response to the middleware data object (134); and
upon receipt of a failure response to the data update command, rollback the data update and transmit a failure response to the middleware data object (134).

12. The backend server of claim 11, wherein the download (112), online (114), and upload (116) services are each remote functions that are callable by middleware data objects (134) via remote function calls.

13. The backend server of claim 11, wherein the middleware interface module includes at least one further service, the at least once further service including:
a transport service (118) that upon receipt of a middleware data object identifier and data to be transmitted to the identified middleware data object (134), builds a transport data structure containing data for transmission to the identified middleware data object (134) encoded in a format that identifies data items included in the transport data structure and values of each included data item.

14. The backend server of claim 11, wherein the download (112), online (114), and upload (116) services, when transmitting data to middleware data objects (134), call the transport service (118).

15. A middleware server (130) comprising a plurality of middlewaxe data objects (134), each middleware data object (134) comprising logical units of data and machine executable code, the middleware server (130) being coupled to mobile end user telecommunication devices (150) via a wireless network (140), wherein the middleware server (130) is further connected to a backend server (102) as described in one of the claims 9-14 via a local area network, the middleware server being configured to:
• Receive a request for retrieval of data from one of the mobile end user telecommunication devices (150) via the wireless network (140), the request identifying one of the plurality of middleware data objects (134) for processing the request,
• Process the request using the identified middleware data object (134) by executing the machine executable code encapsulated in the middleware data object (134) using a processor of the middleware server (130), the execution of the machine executable code causing the middleware server (130) to transmit a Hyper-Text Transport Protocol call directed towards a service (110) of the backend server (102) via the local area network, the service call including the request for data and information identifying the middleware data object (134) causing the Hyper-Text Transport Protocol call,
• Receiving a first transport data structure directed towards the middleware data object (134) via the local area network, the transport data structure comprising the requested data,
• Forwarding the data comprised in the first transport data structure to the mobile end user telecommunication device (150) via the wireless network.

## Patentansprüche

1. Telekommunikationsverfahren für ein digitales zellulares drahtloses Telekommunikationssystem, umfassend mehrere batteriebetriebene mobile Endbenutzer-Telekommunikationsvorrichtungen (150), wenigstens einen Middleware-Server (130), der mehrere Middleware-Datenobjekte (134) aufweist, wobei jedes Middleware-Datenobjekt (134) logische Dateneinheiten und maschinenausführbaren Code aufweist, wobei der Middleware-Server (130) über ein drahtloses Netz (140) mit den mobilen Endbenutzer-Telekommunikationsvorrichtungen (150) gekoppelt ist, wobei das System ferner wenigstens einen Backend-Server (102) aufweist, wobei die Middleware-Server (130) und der Backend-Server (102) über ein lokales Netz verbunden sind, wobei das Verfahren Folgendes umfasst:
• Empfangen einer Anforderung zum Abrufen von Daten von einer der mobilen Endbenutzer-Telekommunikationsvorrichtungen (150) über das drahtlose Netz (140) am Middleware-Server (130), wobei die Anforderung eines der mehreren Middleware-Datenobjekte (134) zur Verarbeitung der Anforderung bestimmt,
• Verarbeiten der Anforderung durch das bestimmte Middleware-Datenobjekt (134) durch Ausführen des maschinenausführbaren Codes, der in dem Middleware-Datenobjekt (134) eingekapselt ist, durch einen Prozessor des Middleware-Servers (130), wobei die Ausführung des maschinenausführbaren Codes den Middleware-Server (130) zum Übertragen eines Hypertext Transport Protocol-Aufrufs, der an einen Dienst (110) des Backend-Servers (102) gerichtet ist, über das lokale Netz veranlasst, wobei der Dienstaufruf die Anforderung von Daten und Informationen, die das Middleware-Datenobjekt (134) bestimmen, welches den Hypertext Transport Protocol-Aufruf veranlasst, beinhaltet,
• Bestimmen von Daten, die in einer Antwort auf die Datenanforderung durch den aufgerufenen Dienst (110) des Backend-Servers (102) einzuschließen sind, durch Abrufen von Informationen aus einer Datenbanktabelle, die in einer Datenbank (106) des Backend-Servers (102) enthalten ist, wobei die Datenbanktabelle eine Datenreihe für jedes der mehreren Middleware-Datenobjekte (134) beinhaltet, wobei die Datenreihe für jedes der mehreren Middleware-Datenobjekte (134) Datenelemente bestimmt, die das jeweilige Middleware-Datenobjekt (134) verarbeiten kann, wobei die abgerufenen Informationen Datenelemente bestimmen, welche das den Hypertext Transport Protocol-Aufruf veranlassende Middleware-Datenobjekt (134) verarbeiten können,
• Abrufen der bestimmten Daten durch den aufgerufenen Dienst (110) durch Durchführen einer Datenabfrage, die an die Datenbank (106) des Backend-Servers (102) gerichtet ist,
• bei Empfang der abgefragten Daten Aufrufen eines Datentransportdienstes (118) zum Aufbauen einer ersten Transportdatenstruktur, die die abgerufenen Daten enthält, wobei die erste Transportdatenstruktur das JavaScript Object Notation-Format hat,
• Übertragen der ersten Transportdatenstruktur an das Middleware-Datenobjekt (134) durch den Transportdienst (18) über das lokale Netz,
• Weiterleiten der Daten, die in der ersten Transportdatenstruktur enthalten sind, an die mobile Endbenutzer-Telekommunikationsvorrichtung (150) über das drahtlose Netz.

2. Telekommunikationsverfahren nach Anspruch 1, wobei das Verarbeiten einer Anforderung von Daten durch ein Middleware-Datenobjekt (134) durch Ausführen des maschinenausführbaren Codes, der in dem Middleware-Datenobjekt (134) enthalten ist, durch einen Prozessor des Middleware-Servers (130) den Middleware-Server zum Übertragen von mehreren Hypertext Transport Protocol-Aufrufen veranlasst, die an mehrere Dienste (110) des Backend-Servers (102) gerichtet sind, was die aufgerufenen Dienste (110) des Backend-Servers (102) zum Antworten durch Übertragen mehrerer erster Transportdatenstrukturen an den Middleware-Server (130) über das lokale Netz veranlasst, wobei die an die mobile Endbenutzer-Telekommunikationsvorrichtung (150) weitergeleiteten Daten den Inhalt jeder ersten als Antwort auf die Hypertext Transport Protocol-Aufrufe empfangenen Transportdatenstruktur aufweisen.

3. Telekommunikationsverfahren nach Anspruch 2, wobei keine Daten an die mobile Endbenutzer-Telekommunikationsvorrichtung (150) weitergeleitet werden, wenn der Inhalt von wenigstens einer der ersten als Antwort auf die Hypertext Transport Protocol-Aufrufe empfangenen Transportdatenstrukturen nicht durch das Middleware-Datenobjekt (134) oder durch die mobile Endbenutzer-Telekommunikationsvorrichtung (150) verarbeitbar ist.

4. Telekommunikationsverfahren nach einem der vorhergehenden Ansprüche, ferner umfassend:
• Empfangen einer zweiten Transportdatenstruktur von einem Middleware-Datenobjekt (134) über das lokale Netz durch einen Dienst (110) des Backend-Servers (102), wobei die zweite Transportdatenstruktur aktualisierte Daten aufweist,
• Auslesen von Daten einschließlich der aktualisierten Daten aus der zweiten Transportdatenstruktur,
• Ermitteln von Datenspeicherstellen, an welchen die aus der zweiten Transportdatenstruktur ausgelesenen aktualisierten Daten zu speichern sind,
• Ausgeben eines Datenaktualisierungsbefehls auf Basis der aus der zweiten Transportdatenstruktur ausgelesenen aktualisierten Daten und der ermittelten Datenspeicherstellen,
• bei Empfang einer Erfolg-Antwort auf den Datenaktualisierungsbefehl Aufrufen des Datentransportdienstes (118) zum Aufbauen einer dritten Transportdatenstruktur mit einem Bezug auf die empfangene zweite Transportdatenstruktur und einschließlich von Daten, die für die erfolgreiche Aktualisierung repräsentativ sind, und zum Übertragen der dritten Transportdatenstruktur an das Middleware-Datenobjekt (134) und
• bei Empfang einer Misserfolg-Antwort auf den Datenaktualisierungsbefehl: Ausgeben eines Rollback-Befehls und Aufrufen des Datentransportdienstes (118) zum Aufbauen einer vierten Transportdatenstruktur mit einem Bezug auf die empfangene zweite Transportdatenstruktur und einschließlich von Daten, die für den Aktualisierungsmisserfolg repräsentativ sind, und zum Übertragen der vierten Transportdatenstruktur an das Middleware-Datenobjekt (134).

5. Telekommunikationsverfahren nach einem der vorhergehenden Ansprüche, wobei der Middleware-Server (130) wenigstens eine Datenbank (136) aufweist, wobei der Backend-Server (102) funktionell ist zum Auslösen der Backend-Dienste (110) zum:
• Bestimmen von Daten, die einem Middleware-Datenobjekt (134) bereitzustellen sind, durch Abrufen entsprechender Informationen aus der Datenbanktabelle, die in der Datenbank (106) des Backend-Servers (102) enthalten ist,
• Abrufen der bestimmten Daten durch Durchführen einer Datenabfrage, die an die Datenbank (106) des Backend-Servers (102) gerichtet ist,
• bei Empfang der abgefragten Daten Aufrufen eines Datentransportdienstes (118) zum Aufbauen einer die abgerufenen Daten enthaltenden ersten Transportdatenstruktur,
wobei der aufgerufene Datentransportdienst (118) bei Aufruf durch den ausgelösten Backend-Dienst (110) die erste Transportdatenstruktur aufbaut und die erste Transportdatenstruktur an den Middleware-Server (130) überträgt, wobei der Middleware-Server (130) bei Empfang der ersten Transportdatenstruktur von dem Backend-Server (102) die empfangene erste Transportdatenstruktur in der Middleware-Server-Datenbank (136) speichert.

6. Telekommunikationsverfahren nach Anspruch 5, wobei das Auslösen von Backend-Diensten (110) durch den Backend-Server (102) durchgeführt wird, sobald die Belastung des lokalen Netzs, das den Middleware-Server (130) und den Backend-Server (102) verbindet, unter eine vordefinierte Schwelle abfällt.

7. Telekommunikationsverfahren nach Anspruch 5 oder 6, wobei bei Empfang einer Anforderung zum Abrufen von Daten von einer der mobilen Endbenutzer-Telekommunikationsvorrichtungen (150) an dem Middleware-Server (130) das von der empfangenen Anforderung bestimmte Middleware-Datenobjekt (134) funktionell ist zum Abfragen der Middleware-Server-Datenbank (106) nach einer ersten Transportdatenstruktur, die der empfangenen Anforderung entspricht, wobei:
• das Middleware-Datenobjekt (134) bei Empfang einer ersten Transportdatenstruktur als Antwort auf die Abfrage die in der ersten Transportdatenstruktur enthaltenen Daten an die mobile Endbenutzer-Telekommunikationsvorrichtung (150) weiterleitet, von der die Anforderung zum Abrufen von Daten ausging,
• das Middleware-Datenobjekt (134) bei Nichtempfang einer ersten Transportdatenstruktur als Antwort auf die Abfrage den Hypertext Transport Protocol-Aufruf, der an einen Dienst des Backend-Servers (102) gerichtet ist, über das lokale Netz überträgt, wobei der Dienstaufruf die Anforderung von Daten und Informationen, die das Middleware-Datenobjekt (134) bestimmen, welches den Hypertext Transport Protocol-Ruf veranlasst, beinhaltet.

8. System, umfassend wenigstens einen Backend-Server (102), wenigstens einen Middleware-Server (130) und wenigstens eine mobile Endbenutzer-Telekommunikationsvorrichtung (150), wobei der Backend-Server (102) über ein lokales Netz mit dem Middleware-Server (130) verbunden ist, wobei die mobile Endbenutzer-Telekommunikationsvorrichtung (150) über ein drahtloses Netz (140) mit dem Middleware-Server (130) verbunden ist, wobei das System zum Ausführen des Verfahrens nach einem der Ansprüche 1 bis 7 funktionell ist.

9. Backend-Server, umfassend:
wenigstens einen Prozessor, wenigstens eine Speichereinrichtung und wenigstens eine Netzschnittstelleneinrichtung,
eine Anwendung (104), die in der wenigstens einen Speichereinrichtung gespeichert wird und von dem wenigstens einen Prozessor ausführbar ist, um Daten in einer Datenbank (106) zu speichern und Anwendungsfunktionalität innerhalb einer ersten vernetzten Rechnerumgebung durch die wenigstens eine Netzschnittstelleneinrichtung bereitzustellen, wobei wenigstens ein Teil der Anwendungsfunktionalität über einen oder mehrere Anwendungsserver (110) aufrufbar ist,
ein Middleware-Schnittstellenmodul, das in der wenigstens einen Speichervorrichtung gespeichert wird, wobei das Middleware-Schnittstellenmodul einen Satz Dienste (110) beinhaltet, die von dem wenigstens einen Prozessor ausführbar sind, wobei die Dienste (110) Folgendes beinhalten:
einen Download-Dienst (112) zum Empfangen von Daten-Download-Anforderungen in Bezug auf Middleware-Datenobjekte (134), wobei jedes Middleware-Datenobjekt (134) logische Dateneinheiten und maschinenausführbaren Code aufweist, wobei eine Daten-Download-Anforderung wenigstens einen Middleware-Datenobjekt-Identifikator beinhaltet, wobei eine Antwort auf die Daten-Download-Anforderung erzeugt wird durch:
Abrufen von Identifikatoren von Datenelementen, die für das anfordernde Middleware-Datenobjekt (134) relevant sind, aus einer Datenbanktabelle, die in der Datenbank (106) des Backend-Servers (102) enthalten ist, wobei die Datenbanktabelle eine Datenreihe für jedes der mehreren Middleware-Datenobjekte (134) beinhaltet, wobei die Datenreihe für jedes der mehreren Middleware-Datenobjekte (134) Datenelemente bestimmt, die das jeweilige Middleware-Datenobjekt (134) verarbeiten kann,
Abrufen von Datenelementen, die den abgerufenen Datenelementidentifikatoren entsprechen, aus der Datenbank (106) und
Erzeugen und Übertragen einer Datenstruktur, die die abgerufenen Datenelemente beinhaltet, an das Middleware-Datenobjekt (134) des Middleware-Datenobj ektidentifikators.

10. Backend-Server nach Anspruch 9, wobei das Middleware-Schnittstellenmodul wenigstens einen weiteren Dienst beinhaltet, wobei der wenigstens eine weitere Dienst Folgendes beinhaltet:
einen Online-Dienst (114) zum Empfangen und Bedienen von Funktionalitätsaufrufanforderungen von Middleware-Datenobjekten (134) über die wenigstens eine Netzschnittstelleneinrichtung, wobei die Verarbeitung einer Funktionalitätsaufrufanforderung das Aufrufen von wenigstens einem Anwendungsdienst, Empfangen einer Antwort darauf und Übertragen von wenigstens einem Teil der Antwort an ein Middleware-Datenobjekt (134), von dem die Funktionalitätsaufrufanforderung empfangen wurde, beinhaltet.

11. Backend-Server nach Anspruch 10, wobei das Middleware-Schnittstellenmodul wenigstens einen weiteren Dienst beinhaltet, wobei der wenigstens eine weitere Dienst beinhaltet:
einen Upload-Dienst (116) zum Empfangen von Datenaktualisierungen von Middleware-Datenobjekten (134),
wobei der Upload-Dienst (116) ausführbar ist zum:
Empfangen einer Datenstruktur, die eine Datenaktualisierung beinhaltet, von einem Middleware-Datenobjekt (134),
Ermitteln von Datenbankstellen, an denen die aktualisierten Daten zu speichern sind,
Ausgeben von wenigstens einem Datenaktualisierungsbefehl an die Datenbank (106) auf Basis der vorbestimmten Speicherstellen,
bei Empfang einer Erfolg-Antwort auf den Datenaktualisierungsbefehl Übertragen einer Erfolg-Antwort an das Middleware-Datenobjekt (134) und
bei Empfang einer Misserfolg-Antwort auf den Datenaktualisierungsbefehl Rollback der Datenaktualisierung und Übertragen einer Misserfolg-Antwort an das Middleware-Datenobjekt (134).

12. Backend-Server nach Anspruch 11, wobei die Download- (112), Online-(114) und Upload- (116) -Dienste jeweils Fernfunktionen sind, die von Middleware-Datenobjekten (134) über Fernfunktionsaufrufe aufrufbar sind.

13. Backend-Server nach Anspruch 11, wobei das Middleware-Schnittstellenmodul wenigstens einen weiteren Dienst beinhaltet, wobei der wenigstens eine weitere Dienst Folgendes beinhaltet:
einen Transportdienst (118), der bei Erhalt eines Middleware-Datenobjektidentifikators und von an das bestimmte Middleware-Datenobjekt (134) zu übertragenden Daten eine Transportdatenstruktur aufbaut, die Daten zur Übertragung an das bestimmte Middleware-Datenobjekt (134) enthält, die in einem Format codiert sind, das Datenelemente, die in der Transportdatenstruktur eingeschlossen sind, und Werte jedes einschlossenen Datenelements beinhaltet.

14. Backend-Server nach Anspruch 11, wobei die Download- (112), Online-(114) und Upload- (116) -Dienste bei Übertragung von Daten an Middleware-Datenobjekte (134) den Transportdienst (118) aufrufen.

15. Middleware-Server (130), umfassend mehrere Middleware-Datenobjekte (134), wobei jedes Middleware-Datenobjekt (134) logische Dateneinheiten und maschinenausführbaren Code aufweist, wobei der Middleware-Server (130) über ein drahtloses Netz (140) mit den mobilen Endbenutzer-Telekommunikationsvorrichtungen (150) gekoppelt ist, wobei der Middleware-Server (130) über ein lokales Netz ferner mit einem Backend-Server (102) verbunden ist, wie in einem der Ansprüche 9 bis 14 beschrieben, wobei der Middleware-Server konfiguriert ist zum:
• Empfangen einer Anforderung zum Abrufen von Daten von einer der mobilen Endbenutzer-Telekommunikationsvorrichtungen (150) über das drahtlose Netz (140), wobei die Anforderung eines der mehreren Middleware-Datenobjekte (134) zur Verarbeitung der Anforderung bestimmt,
• Verarbeiten der Anforderung durch das bestimmte Middleware-Datenobjekt (134) durch Ausführen des maschinenausführbaren Codes, der in dem Middleware-Datenobjekt (134) eingekapselt ist, unter Verwendung eines Prozessors des Middleware-Servers (130), wobei die Ausführung des maschinenausführbaren Codes den Middleware-Server (130) zum Übertragen eines Hyper-text Transport Protocol-Aufrufs, der an einen Dienst (110) des Backend-Servers (102) gerichtet ist, über das lokale Netz veranlasst, wobei der Dienstaufruf die Anforderung von Daten und Informationen, die das Middleware-Datenobjekt (134) bestimmen, welches den Hypertext Transport Protocol-Aufruf veranlasst, beinhaltet,
• Empfangen einer ersten Transportdatenstruktur, die an das Middleware-Datenobjekt (134) gerichtet ist, über das lokale Netz, wobei die Transportdatenstruktur die angeforderten Daten aufweist,
• Weiterleiten der Daten, die in der ersten Transportdatenstruktur enthalten sind, an die mobile Endbenutzer-Telekommunikationsvorrichtung (150) über das drahtlose Netz.

## Revendications

1. Procédé de télécommunication pour un système de télécommunication sans fil cellulaire numérique, comprenant une pluralité de dispositifs de télécommunication d'utilisateur final mobiles alimentés par batterie (150), au moins un serveur intermédiaire (130) comprenant une pluralité d'objets de données intermédiaires (134), chaque objet de données intermédiaire (134) comprenant des unités logiques de données et de code exécutable par machine, le serveur intermédiaire (130) étant couplé aux dispositifs de télécommunication d'utilisateur final mobiles (150) par le biais d'un réseau sans fil (140), le système comprenant en outre au moins un serveur interne (102), les serveurs intermédiaires (130) et les serveurs internes (102) étant raccordés par le biais d'un réseau local, le procédé comprenant :
• la réception d'une demande visant l'extraction de données à partir de l'un des dispositifs de télécommunication d'utilisateur final mobiles (150) au niveau du serveur intermédiaire (130) par le biais du réseau sans fil (140), la demande identifiant l'un parmi la pluralité d'objets de données intermédiaires (134) pour le traitement de la demande,
• le traitement de la demande par l'objet de données intermédiaire (134), par l'exécution du code exécutable par machine encapsulé dans l'objet de données intermédiaire (134) par un processeur du serveur intermédiaire (130), l'exécution du code exécutable par machine amenant le serveur intermédiaire (130) à transmettre un appel de protocole de transfert hypertexte, visant un service (110) du serveur interne (102) par le biais du réseau local, l'appel de service comprenant la demande pour des données et informations identifiant l'objet de données intermédiaire (134) à l'origine de l'appel de protocole de transfert hypertexte,
• l'identification de données à inclure dans une réponse à la demande de données par le service appelé (110) du serveur interne (102) par l'extraction d'informations à partir d'une table de base de données comprise dans une base de données (106) du serveur interne (102), la table de base de données comprenant une rangée de données pour chacun parmi la pluralité d'objets de données intermédiaires (134), la rangée de données pour chacun parmi la pluralité d'objets de données intermédiaires (134) identifiant des éléments de données que l'objet de données intermédiaire (134) respectif est capable de traiter, les informations collectées identifiant des éléments de données que l'objet de données intermédiaire (134) à l'origine de l'appel de protocole de transfert hypertexte est capable de traiter,
• l'extraction des données identifiées par le service appelé (110) par l'exécution d'une recherche de données visant la base de données (106) du serveur interne (102),
• à réception des données recherchées, l'appel d'un service de transfert de données (118) pour construire une première structure de données de transfert contenant les données extraites, la première structure de données de transfert étant au format JavaScript Object Notation,
• la transmission de la première structure de données de transfert à l'objet de données intermédiaire (134) par le service de transfert (118) par le biais du réseau local,
• l'envoi des données comprises dans la première structure de données de transfert au dispositif de télécommunication d'utilisateur final mobile (150) par le biais du réseau sans fil.

2. Procédé de télécommunication selon la revendication 1, dans lequel le traitement d'une demande pour des données par un objet de données intermédiaire (134) par l'exécution du code exécutable par machine compris dans l'objet de données intermédiaire (134) par un processeur du serveur intermédiaire (130) amène le serveur intermédiaire (130) à transmettre une pluralité d'appels de protocole de transfert hypertexte visant une pluralité de services (110) du serveur interne (102), incitant les services appelés (110) du serveur interne (102) à répondre en transmettant une pluralité de premières structures de données de transfert au serveur intermédiaire (130) par le biais du réseau local, les données envoyées au dispositif de télécommunication d'utilisateur final mobile (150) comprenant les contenus de chaque première structure de données de transfert reçue en réponse aux appels de protocole de transfert hypertexte.

3. Procédé de télécommunication selon la revendication 2, dans lequel aucune donnée n'est envoyée au dispositif de télécommunication d'utilisateur final mobile (150) si le contenu d'au moins l'une des premières structures de données de transfert reçue en réponse aux appels de protocole de transfert hypertexte ne peut pas être traité par l'objet de données intermédiaire (134) ou par le dispositif de télécommunication d'utilisateur final mobile (150).

4. Procédé de télécommunication selon l'une quelconque des revendications précédentes, comprenant en outre :
• la réception d'une deuxième structure de données de transfert par un service (110) du serveur interne (102) par le biais du réseau local, en provenance d'un objet de données intermédiaire (134), la deuxième structure de données de transfert comprenant des données actualisées ;
• la lecture de données, y compris des données actualisées, à partir de la deuxième structure de données de transfert ;
• la détermination des emplacements de stockage de données auxquels les données actualisées lues à partir de la deuxième structure de données de transfert sont censées être stockées ;
• l'émission d'une commande d'actualisation de données sur la base des données actualisées lues à partir de la deuxième structure de données de transfert et des emplacements de stockage de données déterminés ;
• à réception d'une réponse de réussite à la commande d'actualisation de données, l'appel du service de transfert de données (118) pour l'élaboration d'une troisième structure de données de transfert faisant référence à la deuxième structure de données de transfert reçue et comprenant des données représentatives de l'actualisation réussie, et pour la transmission de la troisième structure de données de transfert à l'objet de données intermédiaire (134) ; et
• à réception d'une réponse d'échec à la commande d'actualisation de données : l'émission d'une commande de retour en arrière ; et l'appel du service de transfert de données (118) pour élaborer une quatrième structure de données de transfert faisant référence à la deuxième structure de données de transfert reçue et comprenant des données représentatives de l'échec d'actualisation, et pour transmettre la quatrième structure de données de transfert à l'objet de données intermédiaire (134).

5. Procédé de télécommunication selon l'une quelconque des revendications précédentes, dans lequel le serveur intermédiaire (130) comprend au moins une base de données (136), le serveur interne (102) étant opérationnel pour lancer les services internes (110) pour :
• identifier des données à délivrer à un objet de données intermédiaire (134) par l'extraction d'informations correspondantes à partir de la table de base de données compris dans la base de données (106) du serveur interne (102),
• extraire les données identifiées en exécutant une recherche de données visant la base de données (106) du serveur interne (102),
• à réception des données recherchées, appeler un service de transfert de données (118) pour élaborer une première structure de données de transfert contenant les données extraites,
dans lequel le service de transfert de données (118) appelé, lorsqu'il est appelé par le service interne lancé (110), élabore la première structure de données de transfert et transmet la première structure de données de transfert au serveur intermédiaire (130), le serveur intermédiaire (130) stockant la première structure de données de transfert reçue dans la base de données (136) du serveur intermédiaire, à réception de la première structure de données de transfert en provenance du serveur interne (102).

6. Procédé de télécommunication selon la revendication 5, dans lequel le lancement des services internes (110) par le serveur interne (102) est effectué une fois que la charge du réseau local reliant le serveur intermédiaire (130) et le serveur interne (102) est tombée en dessous d'un seuil prédéfini.

7. Procédé de télécommunication selon la revendication 5 ou 6, dans lequel, à réception d'une demande pour l'extraction de données à partir de l'un des dispositifs de télécommunication d'utilisateur final mobiles (150) au niveau du serveur intermédiaire (130), l'objet de données intermédiaire (134) identifié par la demande reçue est opérationnel pour interroger la base de données (106) du serveur intermédiaire pour une première structure de données de transfert correspondant à la demande reçue, dans lequel :
• à réception d'une première structure de données de transfert en réponse à la demande, l'objet de données intermédiaire (134) envoie les données comprises dans la première structure de données de transfert au dispositif de télécommunication d'utilisateur final mobile (150) qui est à l'origine de la demande d'extraction de données,
• à réception d'aucune première structure de données de transfert en réponse à la demande, l'objet de données intermédiaire (134) transmet l'appel de protocole de transfert hypertexte visant un service du serveur interne (102) par le biais du réseau local, l'appel de service comprenant la demande pour des données et informations identifiant l'objet de données intermédiaire (134) à l'origine de l'appel de protocole de transfert hypertexte.

8. Système comprenant au moins un serveur interne (102), au moins un serveur intermédiaire (130) et au moins un dispositif de télécommunication d'utilisateur final mobile (150), dans lequel le serveur interne (102) est connecté au serveur intermédiaire (130) par le biais d'un réseau local, le dispositif de télécommunication d'utilisateur final mobile (150) étant connecté au serveur intermédiaire (130) par le biais d'un réseau sans fil (140), le système étant opérationnel pour exécuter le procédé selon l'une des revendications 1-7.

9. Serveur interne comprenant :
- au moins un processeur, au moins un dispositif de mémoire et au moins un dispositif d'interface réseau ;
- une application (104) stockée dans l'au moins un dispositif de mémoire et exécutable par l'au moins un processeur, pour stocker des données dans une base de données (106) et fournir des fonctionnalités d'application dans un premier environnement informatique en réseau, par le biais de l'au moins un dispositif d'interface réseau, au moins une partie des fonctionnalités d'application pouvant être appelée par le biais d'un ou plusieurs services d'application (110) ;
- un module d'interface intermédiaire stocké dans l'au moins un dispositif de mémoire, le module d'interface intermédiaire comprenant un ensemble de services (110) exécutables par l'au moins un processeur, les services (110) comprenant :
- un service de téléchargement en aval (112) permettant de recevoir des demandes de téléchargement de données concernant des objets de données intermédiaires (134), chaque objet de données intermédiaire (134) comprenant des unités logiques de données et de code exécutable par machine, une demande de téléchargement de données comprenant au moins un identifiant d'objet de données intermédiaire, une réponse à la demande de téléchargement de données générée par :
- l'extraction d'identifiants d'éléments de données relatifs à l'objet de données intermédiaire (134) demandeur, à partir d'unes table de base de données comprise dans la base de données (106) du serveur interne (102), la table de base de données comprenant une rangée de données pour chacun parmi la pluralité d'objets de données intermédiaires (s134), la rangée de données pour chacun parmi la pluralité d'objets de données intermédiaires (134) identifiant des éléments de données que l'objet de données intermédiaire (134) respectif est capable de traiter ;
- l'extraction, à partir de la base de données (106), d'éléments de données correspondant aux identifiants d'élément de données collectés ; et
- la génération et la transmission d'une structure de données comprenant les éléments de données collectés à l'objet de données intermédiaire (134) de l'identifiant d'objet de données intermédiaire.

10. Serveur interne selon la revendication 9, dans lequel le module d'interface intermédiaire comprend au moins un service supplémentaire, l'au moins un service supplémentaire comprenant :
un service en ligne (114) pour la réception et l'entretien de demandes invoquant une fonctionnalité, en provenance d'objets de données intermédiaires (134), par le biais de l'au moins un dispositif d'interface réseau, le traitement d'une demande invoquant une fonctionnalité comprenant l'appel d'au moins un service d'application, la réception d'une réponse à celui-ci, et la transmission d'au moins une partie de la réponse à un objet de données intermédiaire (134) à l'origine de la demande invoquant une fonctionnalité.

11. Serveur interne selon la revendication 10, dans lequel le module d'interface intermédiaire comprend au moins un service supplémentaire, l'au moins un service supplémentaire comprenant :
un service de téléchargement en amont (116) destiné à recevoir des mises à jour de données depuis des objets de données intermédiaires (134), le service de téléchargement en amont (116) étant exécutable pour :
- recevoir une structure de données comprenant une mise à jour de données, en provenance d'un objet de données intermédiaire (134) ;
- déterminer des emplacements de base de données sur lesquels les données actualisées sont censées être stockées ;
- émettre au moins une commande de mise à jour de données vers la base de données (106), sur la base des emplacements de stockage déterminés ;
- à réception d'une réponse de succès à la commande de mise à jour de données, transmettre une réponse de succès à l'objet de données intermédiaire (134) ; et
- à réception d'une réponse d'échec à la commande de mise à jour de données, répéter la mise à jour de données et transmettre une réponse d'échec à l'objet de données intermédiaire (134).

12. Serveur interne selon la revendication 11, dans lequel les services de téléchargement en aval (112), en ligne (114) et de téléchargement en amont (116) sont respectivement des fonctions à distance susceptibles d'être appelées par des objets de données intermédiaires (134) par le biais d'appels de fonction à distance.

13. Serveur interne selon la revendication 11, dans lequel le module d'interface intermédiaire comprend au moins un service supplémentaire, l'au moins un service supplémentaire comprenant :
un service de transfert (118) élaborant, à réception d'un identifiant d'objet de données intermédiaire et de données destinées à être transmises à l'objet de données intermédiaire (134) identifié, une structure de données de transfert contenant des données à transmettre à l'objet de données intermédiaire (134) identifié, encodées dans un format identifiant des éléments de donnés inclus dans la structure de données de transfert et des valeurs de chaque élément de données inclus.

14. Serveur interne selon la revendication 11, dans lequel les services de téléchargement en aval (112), en ligne (114) et de téléchargement en amont (116) appellent le service de transfert (118) lors de la transmission de données aux objets de données intermédiaires (134).

15. Serveur intermédiaire (130) comprenant une pluralité d'objets de données intermédiaires (134), chaque objet de données intermédiaire (134) comprenant des unités logiques de données et de code exécutable par machine, le serveur intermédiaire (130) étant couplé à des dispositifs de télécommunication d'utilisateur final mobiles (150) par le biais d'un réseau sans fil (140), le serveur intermédiaire (130) étant en outre connecté à un serveur interne (102) tel que décrit dans l'une des revendications 9-14 par le biais d'un réseau local, le serveur intermédiaire étant configuré pour :
• recevoir une demande d'extraction de données à partir d'un des dispositifs de télécommunication d'utilisateur final mobiles (150) par le biais du réseau sans fil (140), la demande identifiant l'un parmi la pluralité d'objets de données intermédiaires (134) pour le traitement de la demande,
• traiter la demande à l'aide de l'objet de données intermédiaire (134) identifié, par l'exécution du code exécutable par machine encapsulé dans l'objet de données intermédiaire (134) à l'aide d'un processeur du serveur intermédiaire (130), l'exécution du code exécutable par machine amenant le serveur intermédiaire (130) à transmettre un appel de protocole de transfert hypertexte visant un service (110) du serveur interne (102) par le biais du réseau local, l'appel de service comprenant la demande pour des données et informations identifiant l'objet de données intermédiaire (134) à l'origine de l'appel de protocole de transfert hypertexte,
• recevoir une première structure de données de transfert visant l'objet de données intermédiaire (134) par le biais du réseau local, la structure de données de transfert comprenant les données demandées,
• envoyer les données comprises dans la première structure de données de transfert au dispositif de télécommunication d'utilisateur final mobile (150) par le biais du réseau sans fil.
